# EUROPEAN PATENT SPECIFICATION

(11) **EP 4 052 966 B1**
(45) Date of publication and mention of the grant of the patent: **04.09.2024**
(21) Application number: 22157121.9
(22) Date of filing: 16.02.2022
(51) Int. Cl.: B60R 5/04

(54) **AWNING FOR TRUNK OF VEHICLE AND VEHICLE**
MARKISE FÜR DEN KOFFERRAUM EINES FAHRZEUGS UND FAHRZEUG
AUVENT POUR COFFRE DE VÉHICULE ET VÉHICULE

(30) Priority: 24.02.2021 CN 202110203837
(43) Date of publication of application: 07.09.2022
(73) Proprietor: Stellantis Auto SAS, 78300 Poissy (FR)
(72) Inventor: ZHU, YUZHAO, SHANGHAI, 200233 (CN); MA, JUNXUE, SHANGHAI, 200233 (CN); SONG, XIUMIN, SHANGHAI, 200233 (CN); ZHU, YI, SHANGHAI, 200233 (CN); YAO, QIDONG, SHANGHAI, 200233 (CN)

(56) References cited:
- ES-A1- 2 461 041
- KR-A- 20110 052 774

## Description

### FIELD OF TECHNOLOGY

The present application relates to the technical field of vehicle accessories, and in particular to an awning for a trunk of a vehicle and a vehicle.

### BACKGROUND

At present, a trunk of a vehicle has a relatively large cargo space, and the cargo space communicates with the passenger space. In order to prevent the luggage from being dumped into the passenger space due to bumping, braking or collision of the vehicle, an awning freely unfolded and retracted is generally installed in the trunk to achieve relative isolation between the passenger space and the luggage space and prevent luggage items from being dumped into the passenger space.

Meanwhile, since items in the vehicle may involve the privacy of the vehicle owner, a convenient shelter is needed to shield these items when the trunk is opened. In view of this, the awning may also provide privacy protection functions. Specifically, during the opening process of the trunk tailgate, the awning rotates and stretches as the tailgate rises, thereby blocking the view from the outside to the inside and achieving the purpose of privacy protection.

However, the existing awnings connected to the trunk tailgate often cause the hardboard at the rear end to sink counterclockwise visually due to their hardboard at the rear end or cause the main body of the awning to rotate relative to the horizontal plane, thereby affecting the perceived quality of vehicle.

Examples of awning for a trunk of a vehicle are also known from KR201100521774 that discloses an awning according to the preamble of claim 1, and from ES2461041.

### SUMMARY

### (I) Technical problems to be solved

A first objective of the present application is to provide an awning that may effectively prevent the counterclockwise sinking of the rear end due to heavy hardboard at the rear end, or the rotation of the main body of the awning relative to the horizontal plane, so as to solve the problem of poor perceived quality of vehicle caused by the gravity of the hardboard in the prior art.

A second objective of the present application is to provide a vehicle that may effectively prevent the counterclockwise sinking of the rear end or the rotation of the main body of the awning relative to the horizontal plane due to heavy hardboard at the rear end of the awning, so as to solve the problem of poor perceived quality of vehicle caused by the gravity of the hardboard in the prior art.

### (II) Technical solutions

In order to solve the above technical problems, in one aspect, the present application provides an awning for a trunk of a vehicle, comprising: an awning body; and a connection system, configured to connect the awning body to a tailgate of the trunk and including: a hardboard, disposed within a tail end of the awning body; one or more first hooks, a front end thereof fixed to a front end of the hardboard and extending downward from the front end of the hardboard and toward the tailgate; one or more second hooks, a front end thereof rotatably connected to the first hook and a tail end thereof connected to the tailgate; and one or more stoppers, disposed on a tail end of the first hook, made of rubber material, and having a head protruding backwards from a surface of the first hook, the head abutting against a trim of the tailgate to apply a supporting stress to the tail end of the first hook, the front end of the first hook supporting the front end of the hardboard based on the supporting stress, thereby preventing the hardboard from sinking due to a gravity thereof
In an embodiment, the head protrudes backwards from the surface of the first hook by 3.2 mm.

In an embodiment, the front end of the first hook is fixed to the front end of the hardboard through a screw connection.

In an embodiment, a first cover is covered at a position where the first hook is fixed to the hardboard.

In an embodiment, the first hook is configured in an arc, and has a plurality of protrusions above a middle part of both sides thereof and a handle thereunder.

In an embodiment, a rod is fixed between the plurality of protrusions, and the front end of the second hook is hooked to the rod to be rotatably connected to the first hook.

In an embodiment, the tailgate is provided with a second cover facing an interior of the vehicle, and the second cover partially shields the second hook.

In an embodiment, during an opening and closing process of the tailgate, the second hook connected to the tailgate is driven by the rod to move up and down together with the first hook connected to the second hook, and the hardboard connected with the first hook drives the awning body to unfold and fold.

In order to solve the above technical problems, in the other aspect, the present application provides a vehicle, comprising the awning for a trunk of the vehicle as described above.

### (III) Beneficial effects

The above-mentioned technical solutions of the present application have the following advantages:
The present application provides an awning for a trunk of a vehicle, comprising: an awning body; and a connection system, configured to connect the awning body to a tailgate of the trunk and including: a hardboard, disposed within a tail end of the awning body; one or more first hooks, a front end thereof fixed to a front end of the hardboard and extending downward from the front end of the hardboard and toward the tailgate; one or more second hooks, a front end thereof rotatably connected to the first hook and a tail end thereof connected to the tailgate; and one or more stoppers, disposed on a tail end of the first hook, made of rubber material, and having a head protruding backwards from a surface of the first hook, the head abutting against a trim of the tailgate to apply a supporting stress to the tail end of the first hook, the front end of the first hook supporting the front end of the hardboard based on the supporting stress, thereby preventing the hardboard from sinking due to a gravity thereof. In this way, the center of gravity of the hardboard is moved toward the tailgate through the supporting stress provided by the stoppers of the tailgate trim, thereby effectively preventing the hardboard from sinking due to its own gravity, and thus improving the perceived quality of vehicle.

### BRIEF DESCRIPTION OF THE DRAWINGS

FIG. 1 is a schematic diagram showing states of an awning including a stopper when a tailgate is fully opened and fully closed, respectively according to the present application;
FIG. 2 is a perspective view showing a connection system including a stopper according to the present application;
FIG. 3 is a perspective view showing a connection system including a stopper according to the present application;
FIG. 4 is a side view showing a first hook including a stopper and a hardboard according to the present application;
FIG. 5 is a schematic diagram showing a connection relationship of each element in a connection system according to the present application;
FIGS. 6 and 7 are schematic diagrams showing sinking states of a hardboard with a perceived quality issue;
FIG. 8 is a schematic diagram showing a horizontal state of a hardboard without a perceived quality issue based on the present application; and
FIG. 9 is a schematic diagram showing an awning in a horizontal state and a curved state, respectively.

### Reference Numerals:

10: awning; 100: awning body; 200: connection system; 210: hardboard; 220: first hook; 230: second hook; 240: stopper; 2210: protrusion; 2220: handle; 2230: first cover; 2240: rod; 2410: head; 520: tailgate trim; 530: second cover.

### DETAILED DESCRIPTION

In the present application, unless stated to the contrary, orientation terms such as "upper" are used to refer to the upper side of the awning in normal state, and "front/left", "rear/tail" are defined in terms of the direction of extension and retraction of the awning. Specifically, the retraction direction of the awning is front/left, and the extension direction of the awning is rear/tail. In the present application, terms "first", "second", etc. are used only to distinguish one element from another, and are not intended to indicate order or importance. Regarding the following description involving reference numerals, the same reference numerals in different drawings represent the same or similar elements unless otherwise indicated.

In the following description, the thickness of lines or sizes of elements shown in the drawings may be exaggerated for clarity and convenience of explanation. Besides, the same elements with different shades of color shown in the drawings do not imply that the elements are different, but only to distinguish different states of the same elements.

In addition, the terms used herein are defined based on the functions of the terms in the present application, but may also vary according to user or operator's intention or practice. Therefore, the terms should be defined based on the descriptions throughout the specification.

It should be understood that the specific embodiments described herein are only used to illustrate and explain the present application, but not to limit the present application.

In order to make the objectives, technical solutions, and advantages of the embodiments of the present application clearer, the technical solutions in the embodiments of the present application will be described clearly and completely below in conjunction with the accompanying drawings in the embodiments of the present application. Obviously, the described embodiments are some, rather than all, embodiments of the present application. Based on the embodiments of the present application, all other embodiments obtained by those of ordinary skill in the art without creative work fall within the protection scope of the present application.

The specific embodiments of the present application will be described in detail below in conjunction with the accompanying drawings.

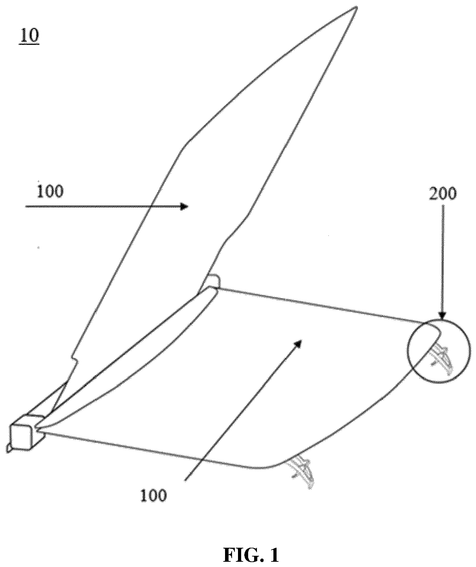

FIG. 1 is a schematic diagram showing states of an awning including a stopper when a tailgate is fully opened and fully closed, respectively according to the present application.

According to an embodiment of the present application, as shown in FIG. 1, an awning 10 includes an awning body 100 and a connection system 200. The connection system 200 connects the awning body 100 to the tailgate of the trunk. Referring to FIG.1, in the embodiment, the awning body 100 may be folded or unfolded from a retractor located at a front end thereof (left side in FIG. 1). The material of the awning in the awning body 100 includes, but is not limited to cloth. The rear end of the awning body 100 is connected to the connection system 200. As shown in FIG. 1, when the tailgate of the trunk is fully opened, the awning body 100 is in a tilted state; and when the tailgate of the trunk is fully closed, the awning body 100 is in a horizontal state. Two connection systems 200 are respectively provided on both sides of the rear end of the awning body 100.

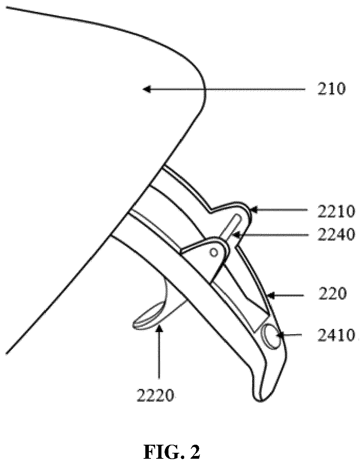

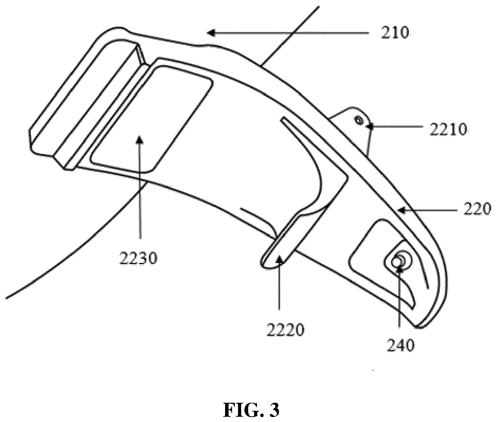

FIGS. 2 and 3 are perspective views showing a connection system including a stopper according to the present application.

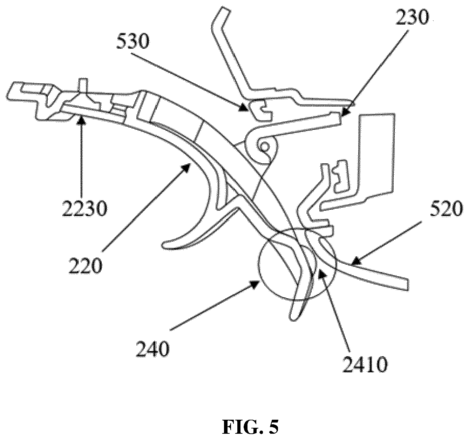

According to an embodiment of the present application, as shown in FIG. 2 and FIG. 3, the connection system 200 includes, but is not limited to, a hardboard 210, one or more first hooks 220, one or more second hooks 230 (not shown in FIG. 2 and FIG. 3, but shown in FIG. 5), and one or more stoppers 240.

Referring to FIGS. 2 and 3, in the embodiment, the front end of the first hook 220 is fixed to the lower side of the front end of the hardboard 210 and extends downward from the front end of the hardboard 210 toward the tailgate so as to transfer stress. For example, the front end of the first hook 220 may be screwed to the lower side of the front end of the hardboard 210, and the first hook 220 may be formed in an arc extending downward from the front end of the hardboard 210 toward the tailgate. The center of the arc is located in front of the first hook 220.

Referring to FIG. 3, a first cover 2230 is covered at a position where the front end of the first hook is fixed to the front end of the hardboard to shield and protect the threaded connection structure therein and prevent additional perceived quality issues.

Referring to FIGS. 2 and 3, the first hook 220 is configured in a substantial arc, and a plurality of protrusions 2210 are integrally formed above the middle of both sides of the first hook 220, and a handle 2220 is provided under the first hook 220. Referring to FIGS.2 and 3, preferably, the handle 2220 is configured as a tongue.

Referring to FIG. 2, a rod 2240 is fixed between the plurality of protrusions 2210, and the front end of the second hook (not shown) is hooked to the rod 2240 so that the second hook may be rotatably connected to the first hook 220.

Referring to FIGS. 2 and 3, the stopper 240 is configured to be mounted on the tail end of the first hook 220 and is made of a flexible material, preferably rubber, and the stopper 240 includes a head 2410 protruding backwards from the surface of the first hook 220. Preferably, the head 2410 protrudes backwards 3.2 mm from the surface of the first hook.

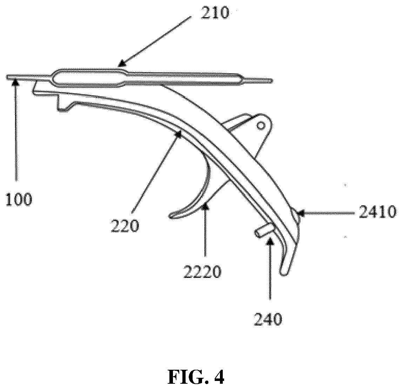

FIG. 4 is a side view showing a first hook including a stopper and a hardboard according to the present application.

According to an embodiment of the present application, referring to FIG. 4, the front end of the first hook 220 configured to be substantially arcuate is a horizontal portion, so that the threaded connection structure here may fix the hardboard 210 and the first hook 220.

Referring to FIG. 4, the handle 2220 of the first hook 220 may be used to pull out the awning body 100 to unfold out of the retractor when the awning 10 provided by the present application is installed.

Referring to FIG. 4, the rear end of the first hook 220 has a curved portion that is bent counterclockwise to the front end of the first hook, so that the head 2410 of the stopper 240 protruding backwards from the surface of the first hook 220 abuts the tailgate trim of the trunk, instead of the tail end body of the first hook 220 directly abutting the tailgate trim. Referring to FIG. 4, the stopper 240 has a certain length relative to the end of the head 2410 to ensure ease of installation, and optionally, the tail end of the stopper 240 may be partially cut off after installation to prevent additional perceived quality issues.

FIG. 5 is a schematic diagram showing the connection relationship of each element in the connection system according to the present application.

According to an embodiment of the present application, as shown in FIG. 5, the connection system 200 includes, but is not limited to, a hardboard 210, a first hook 220, a second hook 230, and a stopper 240.

Referring to FIG. 5, the front end of the first hook 220 is fixed to the front end of the hardboard 210 by screwing, and a first cover 2230 is provided at the fixing place.

Referring to FIG. 5, the tailgate of the trunk is fitted with a second cover 530 facing an interior of the vehicle, which partially blocks the second hook, thereby protecting the second hook and preventing additional perceived quality issues.

Referring to FIG. 5, the front end of the second hook 230 is rotatably connected to the first hook 220 and the rear end thereof is connected to the tailgate. Specifically, the front end of the second hook 230 passes through the rod 2240 between the plurality of projections 2210 (i.e., equivalent to be connected to the first hook 210) and the rear end thereof is connected to the tailgate. In other words, the second hook 230 connected to the tailgate is rotatable with the rod 2240 as an axis. Namely, as an intermediate element between the tailgate and the first hook, the second hook 230 may drive the first hook 220 connected with the second hook 230 to ascend and descend through the rod 2240, and may drive the awning body 100 to unfold and retract through the hardboard 210 connected to the first hook 220.

Referring to FIG. 5, the head 2410 of the stopper 240 abuts against the tailgate trim 520 of the tailgate to apply supporting stress to the tail end of the first hook 220, and makes the front end of the first hook 220 support the front end of the hardboard 210 by the supporting force, so as to prevent the hardboard 210 from sinking due to its own gravity (i.e., a perceived quality issue).

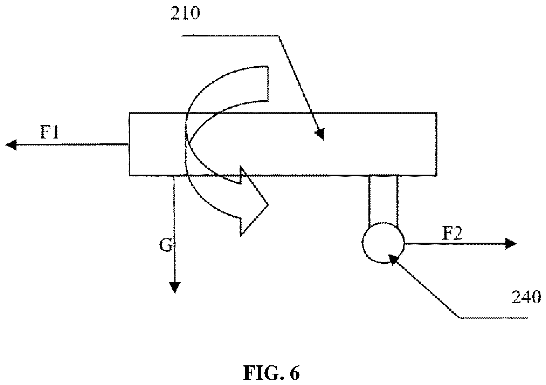

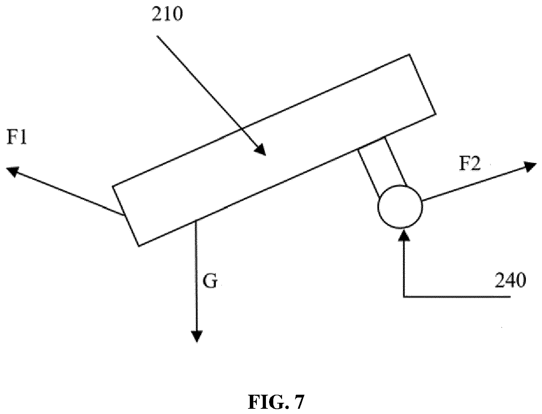

How the perceived quality issue solved by the present application occurs will be described in detail below with reference to FIG. 6 and FIG. 7.

FIGS. 6 and 7 are schematic diagrams showing the sinking state of a hardboard with a perceived quality issue.

With reference to the awning structure described above, the front end of the hardboard 220 may be subjected to the pulling force F1 from the retractor, and the rear end may be subjected to the pulling force F2 (i.e., the reaction force corresponding to the component of gravity G) from the connecting structure connected thereto. Referring to FIGS. 6 and 7, the force directions of pulling force F1 of the retractor, the gravity G, and pulling force F2 of the connecting structure on the hard board 220 are shown in the Figures. And FIG. 6 shows the possible movement directions of the hardboard 220 under the action of the above-mentioned forces. Referring to FIG. 7, under the action of the above-mentioned forces, the front end of the hardboard 220 will sink counterclockwise, thereby causing a perceived quality issue.

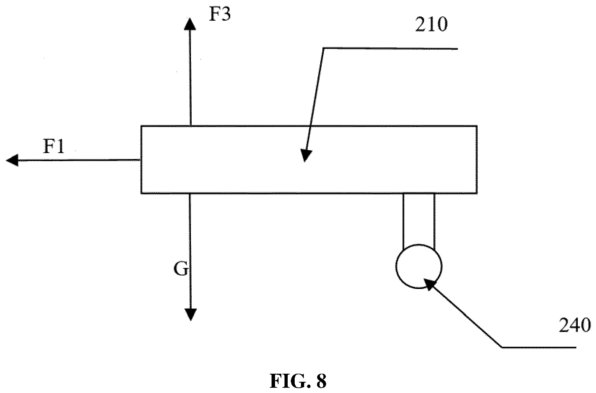

How the present application solves the perceived quality issue will be described in detail below with reference to FIG. 8.

FIG. 8 is a schematic diagram showing a horizontal state of the hardboard without a perceived quality issue based on the present application.

Referring to the above description, the stopper 240 includes a head 2410 protruding backwards from the surface of the first hook 220. The head 2410 abuts against the tailgate trim of the tailgate to apply supporting stress to the tail end of the first hook 220, and makes the front end of the first hook 220 support the front end of the hardboard 210 through the supporting stress F3, so as to prevent the hardboard 210 from sinking due to its own gravity G. As shown in FIG. 8, the front end of the hardboard 210 may be subjected to the supporting stress F3, and its component force is sufficient to offset the gravity G of the hardboard 210, thereby supporting the hardboard 210 and avoiding perceived quality issue.

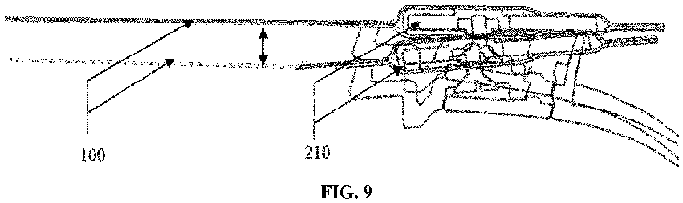

Next, with reference to FIG. 9, the states before and after the perceived quality issue is solved will be compared visually.

FIG. 9 is a schematic diagram showing the awning in a horizontal state and a curved state, respectively.

Referring to FIG. 9, the state shown under the double arrow is the sinking state of the hardboard 210 when the awning body 100 is in a curved state, that is, a perceived quality issue occurs; and the state shown above the double arrow is the horizontal state of the awning body 100 when the hardboard 210 is kept horizontal under the action of the stopper 240 (not shown), that is, there is no perceived quality issue.

## Claims

1. An awning (10) for a trunk of a vehicle, comprising:
an awning body (100); and
a connection system (200), configured to connect the awning body (100) to a tailgate of the trunk, wherein the connection comprises:
a hardboard (210), disposed within a tail end of the awning body (100);
**characterized in that**
one or more first hooks (220), having a front end fixed to a front end of the hardboard (210) and extending downward from the front end of the hardboard (210) and toward the tailgate;
one or more second hooks (230), having a front end rotatably connected to the first hook (220) and a tail end connected to the tailgate; and
one or more stoppers (240), disposed on a tail end of the first hook (220), made of rubber material, and having ahead (2410) protruding backwards from a surface of the first hook (220), the head (2410) abutting against a trim of the tailgate to apply a supporting stress to the tail end of the first hook (220), the front end of the first hook (220) supporting the front end of the hardboard (210) based on the supporting stress, thereby preventing the hardboard (210) from sinking due to a gravity thereof.

2. The awning (10) for a trunk of a vehicle of claim 1, **characterized in that**, the head (2410) protrudes backwards from the surface of the first hook (220) by 3.2 mm.

3. The awning (10) for a trunk of a vehicle of claim 1, **characterized in that**, the front end of the first hook (220) is fixed to the front end of the hardboard (210) through a screw connection.

4. The awning (10) for a trunk of a vehicle of claim 3, **characterized in that**, a first cover (2230) is covered at a position where the first hook (220) is fixed to the hardboard (210).

5. The awning (10) for a trunk of a vehicle of claim 1, **characterized in that**, the first hook (220) is provided to have an arc shape, and has a plurality of protrusions (2210) above a middle part of both sides thereof and a handle (2220) under the middle part.

6. The awning (10) for a trunk of a vehicle of claim 5, **characterized in that**, a rod (2240) is fixed between the plurality of protrusions (2210), and the front end of the second hook (230) is hooked to the rod (2240) to be rotatably connected to the first hook (220).

7. The awning (10) for a trunk of a vehicle of claim 1, **characterized in that**, the tailgate is provided with a second cover (530) facing an interior of the vehicle, and the second cover (530) partially shields the second hook (230).

8. The awning (10) for a trunk of a vehicle of claim 6, **characterized in that**, during opening and closing processes of the tailgate, the second hook (230) connected to the tailgate is driven by the rod (2240) to move up and down together with the first hook (220) connected to the second hook (230), and the hardboard (210) connected with the first hook (220) drives the awning body (100) to unfold and fold.

9. A vehicle, comprising the awning (10) for a trunk of a vehicle of any one of claims 1-8.

## Patentansprüche

1. Markise (10) für einen Kofferraum eines Fahrzeugs, umfassend:
einen Markisenkörper (100) und
Verbindungssystem (200), das konfiguriert ist, um den Markisenkörper (100) mit einer Heckklappe des Kofferraums zu verbinden, wobei die Verbindung umfasst:
Hartfaserplatte (210), die in einem hinteren Ende des Markisenkörpers (100) angeordnet ist, **dadurch gekennzeichnet, dass**
einen oder mehrere erste Haken (220) mit einem vorderen Ende, das an einem vorderen Ende der Hartfaserplatte (210) befestigt ist und sich vom vorderen Ende der Hartfaserplatte (210) nach unten und in Richtung der Heckklappe erstreckt;
einen oder mehrere zweite Haken (230) mit einem vorderen Ende, das drehbar mit dem ersten Haken (220) verbunden ist, und einem hinteren Ende, das mit der Heckklappe verbunden ist; und
Ein oder mehrere Stopper (240), die an einem hinteren Ende des ersten Hakens (220) angeordnet sind, aus Gummimaterial hergestellt sind und einen Kopf (2410) aufweisen, der von einer Oberfläche des ersten Hakens (220) nach hinten vorsteht, wobei der Kopf (2410) an einer Verkleidung der Heckklappe anliegt, um eine Stützspannung auf das hintere Ende des ersten Hakens (220) auszuüben, wobei das vordere Ende des ersten Hakens (220) das vordere Ende der Hartfaserplatte (210) basierend auf der Stützspannung stützt, wodurch verhindert wird, dass die Hartfaserplatte (210) aufgrund ihrer Schwerkraft sinkt.

2. Markise (10) für einen Kofferraum eines Fahrzeugs nach Anspruch 1, **dadurch gekennzeichnet, dass** der Kopf (2410) von der Oberfläche des ersten Hakens (220) um 3,2 mm nach hinten vorsteht.

3. Markise (10) für einen Kofferraum eines Fahrzeugs nach Anspruch 1, **dadurch gekennzeichnet, dass** das vordere Ende des ersten Hakens (220) an dem vorderen Ende der Hartfaserplatte (210) durch eine Schraubverbindung befestigt ist.

4. Markise (10) für einen Kofferraum eines Fahrzeugs nach Anspruch 3, **dadurch gekennzeichnet, dass** eine erste Abdeckung (2230) an einer Stelle abgedeckt ist, an der der erste Haken (220) an der Hartfaserplatte (210) befestigt ist.

5. Markise (10) für einen Kofferraum eines Fahrzeugs nach Anspruch 1, **dadurch gekennzeichnet, dass** der erste Haken (220) so vorgesehen ist, dass er eine Bogenform aufweist, und eine Vielzahl von Vorsprüngen (2210) über einem Mittelteil beider Seiten davon und einen Griff (2220) unter dem Mittelteil aufweist.

6. Markise (10) für einen Kofferraum eines Fahrzeugs nach Anspruch 5, **dadurch gekennzeichnet, dass** eine Stange (2240) zwischen der Vielzahl von Vorsprüngen (2210) befestigt ist und das vordere Ende des zweiten Hakens (230) mit der Stange (2240) verhakt ist, um drehbar mit dem ersten Haken (220) verbunden zu werden.

7. Markise (10) für einen Kofferraum eines Fahrzeugs nach Anspruch 1, **dadurch gekennzeichnet, dass** die Heckklappe mit einer zweiten Abdeckung (530) versehen ist, die einem Innenraum des Fahrzeugs zugewandt ist, und die zweite Abdeckung (530) den zweiten Haken (230) teilweise abschirmt.

8. Markise (10) für einen Kofferraum eines Fahrzeugs nach Anspruch 6, **dadurch gekennzeichnet, dass** während Öffnungs- und Schließvorgängen der Heckklappe der zweite Haken (230), der mit der Heckklappe verbunden ist, durch die Stange (2240) angetrieben wird, um sich zusammen mit dem ersten Haken (220), der mit dem zweiten Haken (230) verbunden ist, auf und ab zu bewegen, und die mit dem ersten Haken (220) verbundene Hartplatte (210) den Markisenkörper (100) antreibt, sich zu entfalten und zu falten.

9. Fahrzeug, umfassend die Markise (10) für einen Kofferraum eines Fahrzeugs nach einem der Ansprüche 1 bis 8.

## Revendications

1. Auvent (10) pour coffre de véhicule, comprenant :
un corps de store (100) et
un système de connexion (200), configuré pour connecter le corps de store (100) à un hayon du coffre, **caractérisé en ce que** la connexion comprend :
un panneau dur (210), disposé à l'intérieur d'une extrémité arrière du corps de store (100), **caractérisé en ce que**
un ou plusieurs premiers crochets (220), ayant une extrémité avant fixée à une extrémité avant du panneau dur (210) et s'étendant vers le bas à partir de l'extrémité avant du panneau dur (210) et vers le hayon ;
un ou plusieurs deuxièmes crochets (230), ayant une extrémité avant reliée en rotation au premier crochet (220) et une extrémité arrière reliée au hayon ; et
un ou plusieurs bouchons (240), disposés sur une extrémité arrière du premier crochet (220), en matériau caoutchouc, et ayant une tête (2410) faisant saillie vers l'arrière à partir d'une surface du premier crochet (220), la tête (2410) venant en butée contre une garniture du hayon pour appliquer une contrainte de support à l'extrémité arrière du premier crochet (220), l'extrémité avant du premier crochet (220) supportant l'extrémité avant du panneau dur (210) sur la base de la contrainte de support, empêchant ainsi la contrainte de support une planche (210) pour éviter un naufrage dû à sa gravité.

2. Auvent (10) pour coffre de véhicule selon la revendication 1, **caractérisé en ce que** la tête (2410) fait saillie vers l'arrière de la surface du premier crochet (220) de 3,2 mm.

3. Auvent (10) pour coffre de véhicule selon la revendication 1, **caractérisé en ce que** l'extrémité avant du premier crochet (220) est fixée à l'extrémité avant du panneau dur (210) par l'intermédiaire d'une liaison vissée.

4. Auvent (10) pour coffre de véhicule selon la revendication 3, **caractérisé en ce qu'**un premier couvercle (2230) est recouvert à un endroit où le premier crochet (220) est fixé au panneau dur (210).

5. Auvent (10) pour coffre de véhicule selon la revendication 1, **caractérisé en ce que** le premier crochet (220) est prévu en forme d'arc de cercle et comporte une pluralité de saillies (2210) au-dessus d'une partie médiane de ses deux côtés et une poignée (2220) sous la partie médiane.

6. Auvent (10) pour coffre de véhicule selon la revendication 5, **caractérisé en ce qu'**une tige (2240) est fixée entre la pluralité de saillies (2210), et l'extrémité avant du deuxième crochet (230) est accrochée à la tige (2240) pour être reliée en rotation au premier crochet (220).

7. Auvent (10) de coffre de véhicule selon la revendication 1, **caractérisé en ce que** le hayon est muni d'un second couvercle (530) tourné vers l'intérieur du véhicule, et le second couvercle (530) protège partiellement le second crochet (230).

8. Auvent (10) pour coffre de véhicule selon la revendication 6, **caractérisé en ce que**, lors des processus d'ouverture et de fermeture du hayon, le deuxième crochet (230) relié au hayon est entraîné par la tige (2240) pour monter et descendre avec le premier crochet (220) relié au deuxième crochet (230), et le panneau dur (210) relié au premier crochet (220) entraîne le dépliage et le pliage du corps d'auvent (100).

9. Véhicule, comprenant l'auvent (10) pour coffre d'un véhicule selon l'une quelconque des revendications 1 à 8.
